**Europäisches Patentamt**

**European Patent Office**

**Office européen des brevets**

(11) Publication number: **0 096 437**
**A2**

## EUROPEAN PATENT APPLICATION

(21) Application number: **83200751.2**

(51) Int. Cl.³: **B 60 G 5/00**

(22) Date of filing: **26.05.83**

(30) Priority: **05.06.82 GB 8216427**

(43) Date of publication of application:
**21.12.83 Bulletin 83/51**

(84) Designated Contracting States:
**AT BE CH DE FR GB IT LI LU NL SE**

(71) Applicant: **NORDE SUSPENSIONS LIMITED**
**Sywell Airport**
**Northampton NN6 OBU(GB)**

(72) Inventor: **Harle, Christopher Norton**
**20 Norton Street**
**Rothwell Northants(GB)**

(74) Representative: **Houghton, David**
**Hulse & Co. Cavendish Buildings West Street**
**Sheffield, S1 1ZZ(GB)**

(54) **Suspension system for vehicles.**

(57) The invention relates to suspension systems for vehicles and is particularly concerned with such systems for vehicles having three or more axles below the load carrying area. With vehicles with two axles it is known to link the axles by a beam and to provide a single suspension means between the beam and the vehicle and whereby the weight of the system is reduced. With three or more axles it is not only necessary to link adjacent axles by beams but also necessary to interconnect the beams and hitherto this has involved the use of intricate multiple linkage systems which of themselves add to the weight and the complexity of the system. The object of the invention is to extend the principle of a linked axle system to a lorry or trailer unit provided with three or more axles which objective is met by a system comprising three or more axles on which the road wheels are rotatably mounted, and beam-like members interconnecting corresponding ends of adjacent axles, with a resilient suspension means interposed between each beam and the underside of the load-bearing area of the lorry or trailer unit, said beam-like members supporting and being pivotally secured to a respective axle by a link engaging a resilient bush at the respective end of a beam, and at least in respect of an inner axle adjacent ends of the two opposed beam-like members being connected to that axle by links that are fixed in relation to each other, which links again engage resilient bushes at the ends of the beams.

./...

EP 0 096 437 A2

Fig. 1

## SUSPENSION SYSTEM FOR VEHICLES

This invention relates to suspension systems for vehicles.

With the need to increase efficiency and cost effectiveness, there is a growing tendancy to increase the load carrying capacity of lorries, particularly of the type having a tractor and a trailer. However, to prevent undue damage to the road surface, current legislation imposes a maximum load that can be carried by a single lorry or tractor/trailer unit, and additionally imposes a maximum load per axle provided below the load carrying area. Thus, within the maximum permitted total load a particular lorry or trailer unit designed for a given load will be provided with either a single or double axle system to maintain the load per axle within permitted limits. As the number of axles increases, then so must increase the number of suspension units to either side of the lorry or trailer unit, and hence there is an increase in the unladen weight of the vehicle with a consequent reduction in maximum weight of goods that can be transported. Thus, as a means of reducing the unladen weight of a vehicle, it is common place to link by beam-like members the corresponding ends of the axles of a double axle system and to provide a single suspension system acting on each beam and whereby both axles are effectively sprung. However, to take up inevitable horizontal movement of the beams, it is necessary to connect adjacent forward and rearward beams with a multiple-link linkage, such that adjacent beam ends are pivotally secured together via the vehicle frame. This adds to the weight of the suspension as a whole, and increases the complexity of the system.

It is the object of the present invention to extend the principle of a linked axle suspension system to a lorry or trailer unit provided with three or more axles below the load carrying area.

According to the present invention, a lorry or trailer unit suspension system comprises three or more axles on which the road wheels are rotatably mounted, and beam-like members interconnececting corresponding ends of adjacent axles, with a resilient suspension means interposed between each beam and the underside of the load-bearing area of the lorry or trailer unit, said beam-like members supporting and being pivotally secured to a respective axle by a link engaging a resilient bush at the respective end of a beam, and at least in respect of an inner axle adjacent ends of the two opposed beam-like members being connected to that axle by links that are fixed in relation to each other, which links again engage resilient bushes at the ends of the beams.

Preferably, the fixed links associated with an innermost axle are formed by a single plate connected at one end to the innermost axle and at the opposite end to each of the opposed beams.

Thus, with a tri-axle system, four beam-like members would be provided connecting the adjacent ends of the outermost axles and the inner axle. Preferably each beam-like member is constructed as a high strength light weight member by providing two spaced plates each of which has an upper outwardly directed flange and a lower inwardly directed flange, to be of generally Z-shaped cross section, secured to and spaced by internal cross-members, and it is further preferred that the suspension means on each beam is of the so-called rubber suspension type, where two rubber blocks inclined with respect to each other are secured between a fixed mounting on the beam-like member and a corresponding mounting on the underside of the load carrying area of the lorry or trailer unit.

Preferably, the pivotal connection between each beam and the respective end of an axle, is formed by providing downwardly extending flanges on the axle to constitute the links at that point, either by forming the flanges integrally with the axle or by forming them separately and securing them in place, e.g., by welding, the beams being recessed at the ends to embrace the flanges, and with the rubber or the like resilient bush inserted through appropriate holes formed through the ends of the beam and the flanges.

With a tri-axle system, for correct articulation between the outermost axles and the inner axle, the suspension means of each beam should be located on the beam such that the centre line through the suspension means is approximately one-third the distance from the pivotal connection to the outermost axle to the pivotal connection to the inner axle.

Thus, during all normal road useage, the inevitable relative displacement in a vertical plane between adjacent axles can comfortably be accommodated by the pivotal movement permitted between each beam and its connection to each axle in a system that is notable by its reduced weight and yet highly robust nature. Under acceleration and braking forces, a trailing balance beam is free to rotate via its linkage with an innermost axle, this resulting in equalisation of loading between the axles and hence a considerably reduced tendency for the road wheels to hop, particularly during severe braking conditions. Such a system is equally cost effective by avoiding the need for a connection formed between adjacent ends of the beams utilising separately formed and connected links.

One embodiment of the invention is shown in the accompanying drawings by way of example only, in which :-

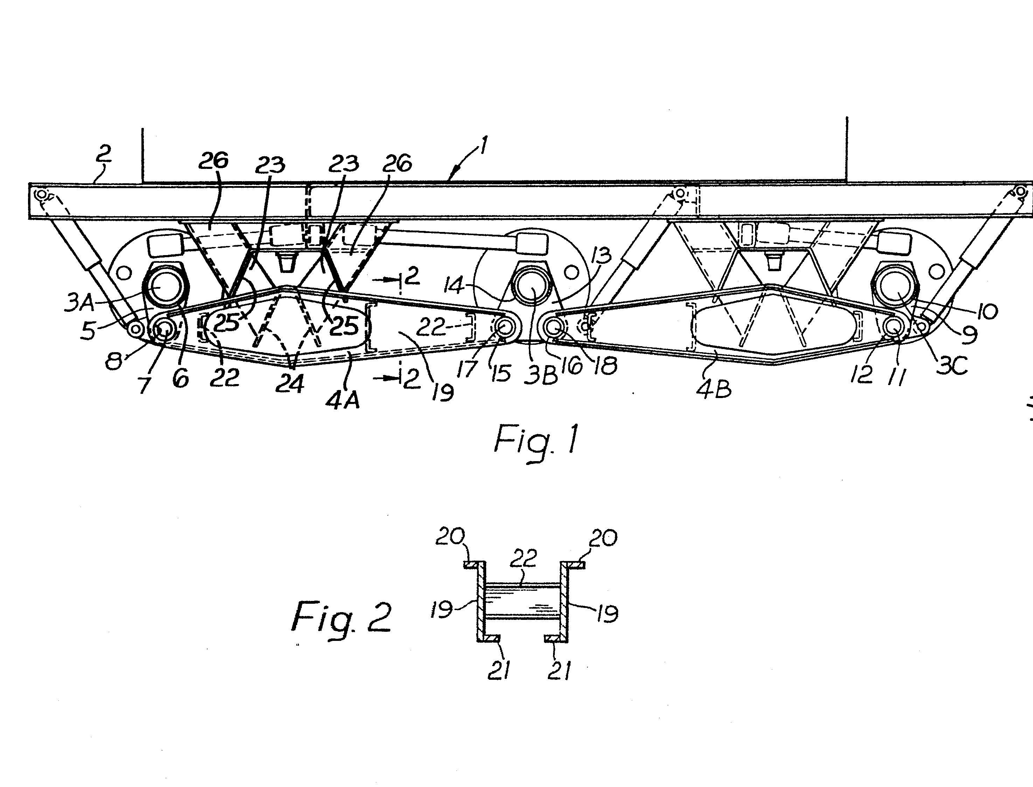

Figure 1 is a side elevation of a tri-axle system in accordance with the invention; and

Figure 2 is a section on the line 2-2 of Figure 1.

In the drawing a trailer vehicle 1 has a load bearing platform 2 below which are three axles 3A, 3B, 3C on which road wheels (not shown) are mounted. The three axles are interconnected by two beams 4A, 4B, with the beam 4A pivotally secured to the axle 3A by way of a link-forming flange 5 secured to the axle by welding as at 6 and engaging a resilient bush 7 passing through holes 8 on the beam, and with the beam 4B similarly secured to the axle 3C by a link-forming flange 9 secured to the axle 4B by welding as at 10 and engaging a resilient bush 11 passing through holes 12 on the beam 4B.

In respect of the inner axle 3B, the adjacent ends of the beams 4A and 4B are pivotally attached in spaced relationship to a link-forming plate 13, with the plate 13 secured to the axle 3B by welding as at 14 and engaging resilient bushes 15, 16 on respective pivot pins 17, 18 mounted on the beams 4A, 4B.

At a distance approximately one third the length of the beam 4A from the axle 3A, suspension means for the load bearing platform are provided, and similarly suspension means are provided on the beam 4B at a distance approximately one third the length of the beam from the axle 3C. In particular, and as is illustrated, it is preferred that the beams 4A, 4B are each constructed as high strength lightweight members by providing two spaced plates 19 each of which has an upper, outwardly directed flange 20 and a lower, inwardly directed flange 21, to be of generally Z-shaped cross-section, secured to and spaced by internal cross members 22. With this construction it is preferred to form the suspension from two inclined rubber blocks 23 bonded to inclined plates 24 secured across the plates 19, and bonded to inclined plates 25 secured to the underside of the load bearing platform by struts 26. It will however be understood that the plates 24 could be mounted on a block pivotally secured to the beam if desired.

Thus, with the identical system shown in the drawings provided at each end of the axles, the inevitable relative displacement in a vertical plane during normal road usage, between adjacent axles can comfortably be accommodated by the pivotal movement permitted between each beam and its connection to each axle in a system that is notable by its reduced weight and yet highly robust nature. Under acceleration and braking forces, a trailing balance beam is free to rotate via its linkage with an innermost axle, this resulting in equalisation of loading between the axles and hence a considerably reduced tendency for the road wheels to hop, particularly during severe braking conditions. Such a system is equally cost effective by avoiding the need for a connection formed between adjacent ends of the beams utilising separately formed and connected links.

CLAIMS

1. A lorry or trailer unit suspension system comprising three or more axles on which the road wheels are rotatably mounted, and beam-like members interconnecting corresponding ends of adjacent axles, with a resilient suspension means interposed between each beam and the underside of the load-bearing area of the lorry or trailer unit, said beam-like members supporting and being pivotally secured to a respective axle by a link engaging a resilient bush at the respective end of a beam, and at least in respect of an inner axle adjacent ends of the two opposed beam-like members being connected to that axle by links that are fixed in relation to each other, which links again engage resilient bushes at the ends of the beams.

2. A lorry or trailer unit suspension system as in Claim 1, wherein the fixed links associated with an innermost axle are formed by a single plate connected at one end to the innermost axle and at the opposite end to each of the opposed beams.

3. A lorry or trailer unit suspension system as in Claim 1 or Claim 2, wherein each

beam-like member is constructed as a high strength light weight member by providing two spaced plates each of which has an upper outwardly directed flange and a lower inwardly directed flange, to be of generally Z-shaped cross-section, secured to and spaced by internal cross-members.

4. A lorry or trailer unit suspension system as in any of Claims 1 to 3, wherein the suspension means on each beam is of the so-called rubber suspension type, where two rubber blocks inclined with respect to each other are secured between a fixed mounting on the beam-like member and a corresponding mounting on the underside of the load carrying area of the lorry or trailer unit.

5. A lorry or trailer unit suspension system as in any of Claims 1 to 4, wherein the pivotal connection between each beam and the respective end of an axle, is formed by providing downwardly extending flanges on the axle to constitute the links at that point.

6. A lorry or trailer unit suspension system as in Claim 5, wherein the flanges are formed or separately formed and secured to the axles.

7. A lorry or trailer unit suspension system as in Claim 5 or Claim 6, wherein the beams are recessed at the ends to embrace the flanges, and with the rubber or the like resilient bush inserted through appropriate holes formed through the end of the beam and the flanges.

8. A lorry or trailer unit suspension system as in any of Claims 1 to 7, wherein the suspension means of each beam should be located on the beam such that the centre line through the suspension means is approximately one-third the distance from the pivotal connection to the outermost axle to the pivotal connection to the inner axle.

Fig. 1

Fig. 2